# EUROPÄISCHE PATENTSCHRIFT

(11) **EP 0 658 059 B1**
(45) Veröffentlichungstag und Bekanntmachung des Hinweises auf die Patenterteilung: **28.07.1999**
(21) Anmeldenummer: 94117494.8
(22) Anmeldetag: 07.11.1994
(51) Int. Cl.: H04Q 1/14

(54) **Anschluss- und Trennleiste**
Connecting and disconnecting block
Plaque à bornes de raccordement et déconnexion

(30) Priorität: 15.11.1993 CH 341293
(43) Veröffentlichungstag der Anmeldung: 14.06.1995
(73) Patentinhaber: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(56) Entgegenhaltungen:
- EP-A- 0 402 658
- EP-A- 0 455 274
- DE-B- 2 348 466
- DE-B- 2 643 046

## Beschreibung

Die vorliegende Erfindung betrifft eine Anschluss- und Trennleiste zum Trennverteilen einer Vielzahl Leiter von abgeschirmten Kabeln für die Tele- und Datenkommunikation, mit ersten Mitteln zur Schneid-Klemm-Andrahtung der ankommenden Leiter und zweite Mittel zur Schneid-Klemm-Andrahtung der abgehenden Leiter oder Überführungen, wobei die Leiste in ein Trägergestell einbaubar und die Abschirmung der Kabel mit der Masse des Trägergestells verbindbar ist.

Aus der Europäischen Patentanmeldung EP-A-0 402 658 ist eine Anschlussverteilerleiste für ankommende und abgehende elektrische Leitungen bekannt.

In der Tele- und Datenkommunikation finden elektrische Leiter, die gegen störende äussere elektrische Felder durch eine sehr gut leitende metallische Umhüllung abgeschirmt sind, immer häufiger Anwendung. Problematisch ist dabei aber deren HF-mässig optimale Erdung im Leiteranschlussbereich der Anschluss- und Trennleisten im Trägergestell unter minimalsten Platzverhältnissen.

Aufgabe der vorliegenden Erfindung ist deshalb die Schaffung einer Anschluss- und Trennleiste der vorgenannten Art, bei welcher eine optimale Erdung der Abschirmung der Kabel resp. Leiter unter HF-Bedingungen herstellbar ist.

Dies wird erfindungsgemäss zunächst erreicht durch ein erstes, in die Leiste einsteckbares Erdverbindungsteil mit einer Abragung zur Auflage, Befestigung und Kontaktierung der Abschirmung des ankommenden Kabels, mit Federmitteln zum Kontaktieren des Trägergestelles, mit Multipel-Abragungen zur Kontaktierung von Beilaufdrähten und mit Klemm-Mitteln zum klemmenden, kontaktierenden Aufstecken eines zweiten Erdverbindungsteiles zur Aufnahme und Abschirmkontaktierung der abgehenden abgeschirmten Kabel.

Hiebei besteht eine vorteilhafte Ausgestaltung des Erfindungsgegenstandes darin, dass das erste Erdverbindungsteil etwa T-förmig ausgebildet ist, wobei die Multipel-Abragungen vom Quersteg des Erdverbindungsteiles kammartig abragen und die Klemm-Mittel für das zweite Erdverbindungsteil am anderen Steg seitlich aufgebogen sind.

Vorteilhaft ist dabei das zweite Erdverbindungsteil schachtelartig ausgebildet mit einer ersten inneren Unterteilung zur seitlichen Herausführung der abgeschirmten abgehenden Kabel und mit Federzungen zur Kontaktiertung der Abschirmungen der abgehenden Kabel sowie mit einer zweiten inneren Unterteilung zur Herausführung der vereinzelten abgehenden Leiter oder Überführungen. Ferner kann das zweite schachtelförmige Erdverbindungsteil eine seitliche Abragung aufweisen, die sich mit Flächenteilen zwischen den Stegen der Klemm-Mittel des ersten Erdverbindungsteiles erstrecken.

Eine beispielsweise Ausführungsform des Erfindungsgegenstandes ist nachfolgend anhand der Zeichnung näher erläutert. Es zeigen:
- Fig. 1: eine Anschluss- und Trennleiste zum Trennverteilen einer Vielzahl Leiter von abgeschirmten Kabeln für die Tele- und Datenkommunikation,in schaubildartiger Darstellung; und
- Fig. 2: eine Seitenansicht der Anordnung gemäss Fig. 1.

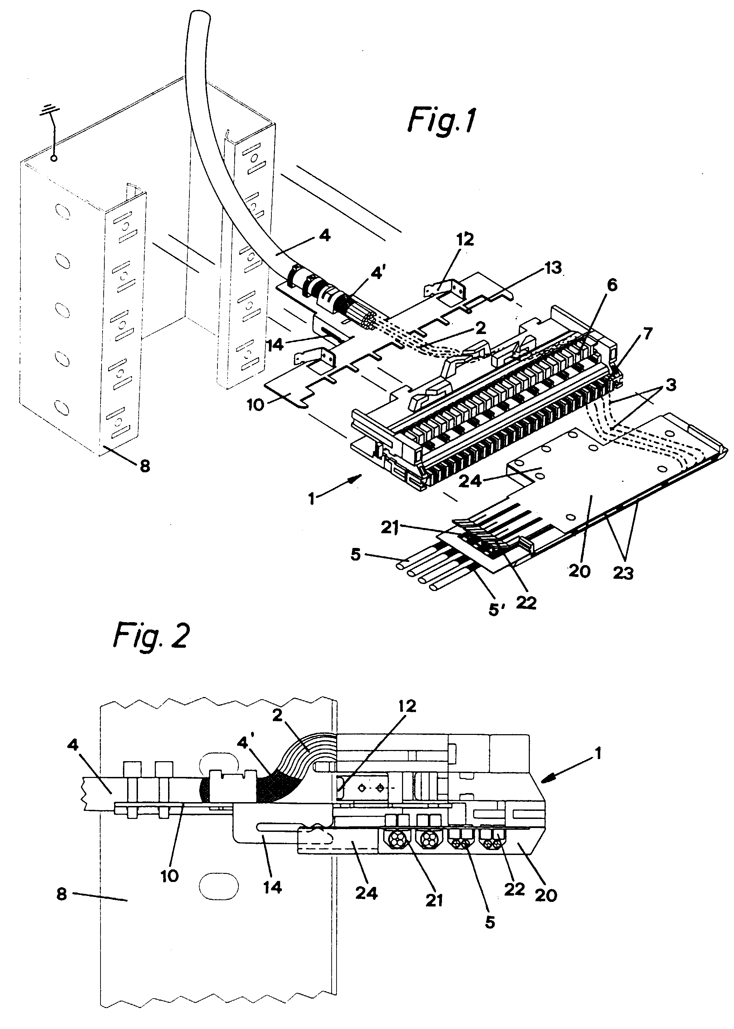

Gemäss den Figuren 1 und 2 umfasst die erfindungsgemässe Anschluss- und Trennleiste in bekannter Weise erste Mittel 6 zur Schneid-Klemm-Andrahtung der ankommenden Leiter 2 und zweite Mittel 7 zur Schneid-Klemm-Andrahtung der abgehenden Leiter oder Überführungen 3, wobei die Leiste 1 in ein Trägergestell 8 einbaubar und die Abschirmung 4',5' der Kabel 4,5 mit der Masse des Trägergestells verbindbar ist.

Erfindungsgemäss ist nun ein erstes, in die Leiste 1 einsteckbares Erdverbindungsteil 10 vorgesehen mit einer Abragung 11 zur Auflage, Befestigung und Kontaktierung der Abschirmung 4' des ankommenden Kabels 4, sowie mit Federmitteln 12 zum Kontaktieren des Trägergestelles 8, mit Multipel-Abragungen 13 zur Kontaktierung von Beilaufdrähten und Klemm-Mittel 14 zum klemmenden, kontaktierenden Aufstecken eines zweiten Erdverbindungsteiles 20.

Dieses zweite Erdverbindungsteil dient der Aufnahme und Abschirmkontaktierung der abgehenden abgeschirmten Kabel 5.

Das erste Erdverbindungsteil 10 ist etwa T-förmig ausgebildet, wobei die Multipel-Abragungen 13 vom Quersteg des Erdverbindungsteiles kammartig abragen und die Klemm-Mittel 14 für das zweite Erdverbindungsteil 20 am anderen Steg seitlich aufgebogen sind.

Das zweite Erdverbindungsteil 20 ist schachtelartig ausgebildet mit einer ersten inneren Unterteilung 21 zur seitlichen Herausführung der abgeschirmten abgehenden Kabel 5 und mit Federzungen 22 zur Kontaktiertung der Abschirmungen 5' der abgehenden Kabel 5. Ferner weist das schachtelartige Teil 20 eine zweite innere Unterteilung 23 zur Herausführung der vereinzelten abgehenden Leiter oder Überführungen 3 auf. Ferner besteht am zweiten schachtelförmigen Erdverbindungsteil 20 eine seitliche Abragung 24, die sich mit Flächenteilen zwischen den Stegen der Klemm-Mittel 14 des ersten Erdverbindungsteiles 10 erstrecken.Die Erdverbindungsteile 10 und 20 können aus einem beliebigen, geeignet leitenden Metall sein.

Aus dem Vorstehenden ergibt sich so eine kompakte Bauanordnung, die alle vorerwähnten Bedingungen erfüllt und die sich leicht handhaben lässt.

Es wird Schutz beansprucht wie folgt:

## Patentansprüche

1. Anschluss- und Trennleiste zum Trennverteilen einer Vielzahl Leiter (2,3) von abgeschirmten Kabeln (4,5) für die Tele- und Datenkommunikation, mit ersten Mitteln (6) zur Schneid-Klemm-Andrahtung der ankommenden Leiter (2) und zweiten Mitteln (7) zur Schneid-Klemm-Andrahtung der abgehenden Leiter oder Überführungen (3), wobei die Leiste (1) in ein Trägergestell (8) einbaubar und die Abschirmung (4',5') der Kabel (4,5) mit der Masse des Trägergestells verbindbar ist,
**gekennzeichnet durch**
ein erstes, in die Leiste (1) einsteckbares Erdverbindungsteil (10) mit einer Abragung (11) zur Auflage, Befestigung und Kontaktierung der Abschirmung (4') des ankommenden Kabels (4), mit Federmitteln (12) zum Kontaktieren des Trägergestelles (8), mit Multipel-Abragungen (13) zur Kontaktierung von Beilaufdrähten und mit Klemm-Mitteln (14) zum klemmenden, kontaktierenden Aufstecken eines zweiten Erdverbindungsteiles (20) zur Aufnahme und Abschirmkontaktierung der abgehenden abgeschirmten Kabel (5).

2. Anschluss- und Trennleiste nach Anspruch 1,
**dadurch gekennzeichnet**,
dass das erste Erdverbindungsteil (10) etwa T-förmig ausgebildet ist, wobei die Multipel-Abragungen (13) vom Quersteg des Erdverbindungsteiles kammartig abragen und die Klemm-Mittel (14) für das zweite Erdverbindungsteil (20) am anderen Steg seitlich aufgebogen sind.

3. Anschluss- und Trennleiste nach Anspruch 1,
**dadurch gekennzeichnet**,
dass das zweite Erdverbindungsteil (20) schachtelartig ausgebildet ist mit einer ersten inneren Unterteilung (21) zur seitlichen Herausführung der abgeschirmten abgehenden Kabel (5) und mit Federzungen (22) zur Kontaktiertung der Abschirmungen (5') der abgehenden Kabel (5) sowie mit einer zweiten inneren Unterteilung (23) zur Herausführung der vereinzelten abgehenden Leiter oder Überführungen (3).

4. Anschluss- oder Trennleiste nach Ansprüchen 2 und 3,
**dadurch gekennzeichnet**,
dass das zweite schachtelförmige Erdverbindungsteil (20) eine seitliche Abragung (24) aufweist, die sich mit Flächenteilen zwischen den Stegen der Klemm-Mittel (14) des ersten Erdverbindungsteiles (10) erstrecken.

## Claims

1. Connecting and disconnecting block for separately distributing a number of conductors (2, 3) of shielded cables (4, 5) for telecommunications and data communications, with primary means (6) for the insulation-displacement connection of the incoming conductors (2) and secondary means (7) for the insulation-displacement connection of the outgoing conductors or transitions (3), whereby the strap (1) can be incorporated into a supporting frame (8) and the screening (4', 5') of the cables (4, 5) can be connected to the chassis of the supporting frame, characterized in that a first earth-connection part (10) that can be plugged into the strap (1) and that has a projection (11) for supporting, securing and contacting the screening (4') of the incoming cable (4), with sprung means (12) for contacting the supporting frame (8), with multiple projections (13) for contacting parallel wires, and with clamping means (14) for the clamped contacting insertion of a second earth-connection part (20) for the acceptance and screened contacting of the outgoing screened cables (5).

2. Connecting and disconnecting block in accordance with claim 1, characterized in that the first earth-connection part (10) is approximately T-shaped, whereby the multiple projections (13) project like the teeth of a comb from the crosstie of the earth-connection part and the clamping means (14) for the second earth-connection part (20) are bent laterally upwards at the other tie.

3. Connecting and disconnecting block in accordance with claim 1, characterized in that the second earth-connection part (20) is of nested form with a first inner subdivision (21) for bringing the screened outgoing cables (5) out laterally, with sprung tongues (22) for contacting the screening (5') of the outgoing cables (5), and with a second inner subdivision (23) for bringing out the individual outgoing conductors or transitions (3).

4. Connecting or disconnecting block in accordance with claims 2 and 3, characterized in that the second nested-form earth-connection part (20) displays a lateral projection (24) whose flat parts extend between the ties of the clamping means (14) of the first earth-connection part (10).

## Revendications

1. Plaque à bornes de raccordement et déconnexion pour distribution séparée d'une multitude de conducteurs (2, 3) de câbles protégés (4, 5) pour les télécommunications et les communications de données, comprenant des premiers moyens (6) pour couper, coincer et connecter les conducteurs d'arrivée (2), et des seconds moyens (7) pour couper, coincer et connecter les conducteurs de départ ou jarretières (3), la plaque à bornes (1) pouvant être intégrée à un châssis de support (8) et la protection (4', 5') des câbles (4, 5) pouvant être raccordées à la masse du châssis de support, caractérisé par un premier élément de mise à la terre (10) emboîtable dans la plaque à bornes (1), et comprenant une lamelle (11) pour l'appui, la fixation et la mise en contact de la protection (4') du câble d'arrivée (4), des éléments à effet de ressort (12) pour la mise en contact du châssis de support (8), des lamelles multiples (13) pour la mise en contact de fils de repère, et des moyens de serrage (14) pour coincer et emboîter, avec contact, un second élément de mise à la terre (20) pour réceptionner et mettre en contact la protection des câbles de départ protégés (5).

2. Plaque à bornes de raccordement et déconnexion selon la revendication 1, caractérisée en ce que le premier élément de mise à la terre (10) est à peu près en forme de T, les lamelles multiples (13) se détachant, à la manière d'un peigne, de la barrette transversale de l'élément de mise à la terre, et les moyens de serrage (14) pour le second élément de mise à la terre (20) étant repliés latéralement sur l'autre barrette.

3. Plaque à bornes de raccordement et déconnexion selon la revendication 1, caractérisée en ce que le second élément de mise à la terre (20) est configuré à la manière d'une boîte avec un premier compartiment intérieur (21) pour l'extraction latérale des câbles de départ protégés (5), et avec des languettes ressorts (22) pour mise en contact des protections (5') des câbles de départ (5), ainsi qu'avec un second compartiment intérieur (23) pour l'extraction des conducteurs de départ individualisés ou jarretières (3).

4. Plaque à bornes de raccordement et déconnexion selon les revendications 2 et 3, caractérisée en ce que le second élément de mise à la terre (20) en forme de boîte présente une lamelle latérale (24) qui s'étend avec certaines parties de sa surface entre les barres des moyens de serrage (14) du premier élément de mise à la terre (10).
